# EUROPEAN PATENT APPLICATION

(11) **EP 2 533 464 A1**
(43) Date of publication of application: **12.12.2012**
(21) Application number: 09852878.9
(22) Date of filing: 21.12.2009
(51) Int. Cl.: H04L 12/28, H04L 29/06

(54) **METHOD AND SYSTEM FOR SUBSCRIBING TO SERVICES VIA EXTENDED UPNP STANDARD AND NASS TISPAN AUTHENTICATION**

(71) Applicant: Telefónica, S.A., 28013 Madrid (ES)
(72) Inventor: PALACIOS VALVERDE, José Manuel, E-28027 Madrid (ES)
(74) Representative: Gonzalez-Alberto Rodriguez, Natalia
(86) International application number: PCT/ES2009/070613
(87) International publication number: WO 2011/083183

(57) **Abstract**

The present invention relates to a subscription method and system providing a modification of the UPnP standard, which by means of TISPAN delegated NASS authentication allows a user to play contents provided by a service provider via subscription by means of a control point which can be any consumer electronic device of the user. The modification of the standard is based on adding a field called 'subscriptionURL' and a variable called 'subscriptionStatus'. These modifications, the association established by the TISPAN CLF module between the user IP and the user IMSI and the implementation of a UPnP device in the user equipment, allow subscribing to the services provided by several service providers.

## Description

### Object of the Invention

As expressed in the title of the present specification, the present invention relates to a method and system extending the UPnP "Universal Plug and Play" standard with the user concept by means of the identity of said user, and more specifically by means of his/her unique user identity (IMSI), being applicable to telecommunications systems and especially to systems where a telecommunications service provider offers UPnP services for subscription based on the end user identity.

By means of extending the UPnP standard proposed in the present invention, the services offered by a telecommunications service provider are presented in a safe and effective manner using user electronic devices (TV, mobile telephone, PDA, computer, etc.).

### Background of the Invention

Online services are usually described using web applications residing in Internet Servers. These web applications used for accessing internet services are indexed by the main internet search engines. To find an application, a user opens his/her preferred search engine using the internet browser and enters some words referring to the service sought. As a result of the search, the user will see a list with the results that has to be used to find the web application and thus be able to subscribe to the desired online service. It is also possible for the user to know in advance the URL address for accessing the desired web application, but it is not the usual scenario. Once the end user has the link to the online store of services, said user can browse through the catalog and subscribe to the desired services.

Electronic user devices are increasingly more intelligent. The last generation of devices uses a client/server paradigm where the services implemented by the devices are automatically discovered by the service clients. To achieve this easy intercommunication, electronic user devices implement the UPnP standard. As a result of this protocol, a UPnP control point can easily, and with no additional configuration by the user, discover the services implemented by UPnP devices and use them.

Physical electronic UPnP devices have root devices and embedded devices in said root devices. The control points can discover the services announced by both the root devices and by the embedded devices. As soon as a control point discovers a service, it can start to use it. The UPnP standard defines a security service called DeviceSecurity. This DeviceSecurity allows defining access control lists (ACL) for restricting the use of device services, whether they are root or embedded devices, to certain control points. However, most control points do not implement this service. Even for devices implementing this service, said service is not widely used because it requires establishing some manual configurations and UPnP technology is designed for a transparent use of the services. In fact, UPnP technology does not define the concept of system user as an entity that can use a control point for accessing services and that must subscribe to the services provided by devices having access to them.

On the other hand, telecommunication service providers provide identity to their clients or users when they are connected to the telecommunications network. Depending on the technology deployed by the service provider, some authentication methods or others are used. For example, if a user uses a PPP (Point-to-Point Protocol) connection, said user must use CHAP (Challenge-Handshake Authentication Protocol) or PAP (Push Access Protocol) authentication to set up said PPP connection. The processes for authentication and registration in the telecommunications network are specified in the NGN (Next Generation Network) architecture defined by TISPAN (Telecommunication and Internet converged Services and Protocols for Advanced Networking).

The TISPAN NGN architecture is designed in four layers:
● Application layer.
● Service layer.
● Transport control sublayer made up of at least: NASS (Network Attachment Subsystem) for the authentication and authorization tasks, and the RACS (Resource and Admission Control Subsystem) for the quality of service (QoS) tasks of supplying and switching.
● Transfer function layer: provides the IP connectivity to the end user equipment.

On the other hand, the most important modules forming the NASS subsystem are the following:
● the ARF (Access Relay Function) module;
● the UAAF (User Access Authorization Function) module;
● the AMF (Access Management Function) module;
● the CLF (Connectivity Session Location and Repository Function) module;
● the NACF (Network Attachment Control Function) module; and,
● the PDBF (Profile Database Function) module.

Therefore, the CLF module allows obtaining the identity of the user registered in the network from his/her IP address. However, no method or process has been found in the state of the art in which the use of the identity that a user presents to the network for subscribing to UPnP service is disclosed.

Some of the approximate solutions found in the state of the art are, for example, patent application WO2006061682 entitled "Providing Mobile-Specific Services for Mobile Devices Via Ad-hoc Networks", disclosing a method for publishing mobile services (SMS, VoIP, etc.) in a UPnP network which allows subscribing from a mobile device. The proposed solution does not use the technology disclosed by the present invention, further having certain limitations (services only for mobiles and exclusive subscription from the mobile terminal) not present in the present invention.

Another example of an approximate solution can be found in patent application US20070162980 entitled "System and Method for providing Content Security in UPnP Systems", disclosing a method for controlling access to a communications media UPnP server, which is not the object of the present invention.

Other examples of patents that are less related to the object of the present invention are patent application EP1571803 entitled "Information-provision control method, information reproduction system, and information-provision apparatus" which discloses a method that allows a user to change a communication medium lent to another without stopping the content that is being shown, and patent application US20050266826 entitled "Method for establishing a security association between a wireless access point and a wireless node in a UPnP environment", which discloses a system and a method for setting up a secure connection between an access point and a wireless node in a UPnP system.

Therefore, there continues to be a lack of an automatic mechanism that allows informing the user of the services provided by a telecommunications service provider through the electronic devices of said user, such as, for example, the TV, mobile telephone, computer, etc.

### Description of the Invention

To meet the objectives and to prevent the aforementioned drawbacks, the invention consists of a method and a system that is capable of announcing the services offered by a telecommunications service company in any UPnP type device of a specific user by means of broadening the UPnP standard. Furthermore, said broadening of the UPnP standard combined with a TISPAN delegated NASS authentication, will allow the user to subscribe to a UPnP service.

To meet the aforementioned objective, the system and method of the present invention adds the concept of user to the UPnP standard by means of the technical characteristic of associating the identity of the user with the unique user identifier "IMSI" provided by the telecommunications service provider by broadening the UPnP standard. Said broadening is complemented with a series of elements (modules, components, steps, etc.) to allow the aforementioned subscription of services.

The novel system for subscribing services by means of extended UPNP standard and TISPAN delegated NASS authentication of the present invention comprises at least:
● one UPnP "Universal Plug and Play" service distributed in at least two different nodes: a user node located in the user equipment and a service provider node located in the service provider equipment;
● one user equipment comprising at least:
   o one home gateway connecting a user network with at least one service provider network;
   o one UPnP device placed in a placement option selected from the home gateway and a device outside said gateway and connected to said gateway, wherein said UPnP device comprises at least one device description document and at least one service description document, wherein the device description document comprises at least, in the service description part of each service, a field called 'subscriptionURL', representing the URL address of a subscription web interface, and wherein the service description document comprises at least one status variable called 'subscriptionStatus' for each UPnP service implemented by said UPnP device, indicating the subscription status of the user to said UPnP service provided by the service provider;
   o one control point searching the UPnP service placed in the UPnP device and checks the subscription status of the user to said implemented UPnP service, wherein said control point allows accessing said UPnP service if the user subscribes to said UPnP service, and otherwise, redirecting the user to a contracting URL;
● a service provider equipment comprising at least:
   o one subscription service module comprising at least information of the subscription status of the user to the UPnP service;
   o one ARF "Access Relay Function" module inserting the local configuration into the user requests;
   o one UAAF "User Access Authorization Function" module carrying out user authentication and authorizing said user for his/her access to the service provider network;
   o one AMF "Access Management Function" module translating the network access requests emitted by the user and resends them to the UAAF module;
   o a CLF "Connectivity Session Location and Repository Function" module maintaining the correspondence between the user IP address and his/her identity;
   o one NACF "Network Attachment Control Function" module sending the configuration data of the WAN "Wide Area Network" interface to the home gateway, wherein said configuration data comprises at least one IP address, one network mask and one gateway; and,
   o one PDBF "Profile Database Function" module containing the user authentication data at network level.

The novel UPnP service of the present invention includes all the elements necessary for replying to the user requests for service. An example of a possible service is the content of the service called UPnP Content Directory Service. By using this service, the user can browse the content of a catalogue of a certain company.

In the part of the service provider node, the UPnP services of the present invention are extended with the "subscription service" module which, among other functions, stores whether a user has subscribed to any type of service, in which case it informs him/her in accordance with the stipulated terms. If the user is not subscribed to any service, it informs him/her by means of a predefined reply that he/she is not subscribed to the service.

The CLF module of the present invention additionally receives the identity of the user who has performed a "network association process" from the UAAF module together with the access identity of the user and the IP address assigned to the user from the NACF module together with the access identity of the user, such that it can maintain the correspondence between the IP address of a user and his/her identity.

The UAAF module of the present invention additionally comprises sending, to the CLF module, the information of the user who has been authenticated and authorized to connect to the service provider network.

The control point of the present invention checks the information about the service subscription status using the novel status variable 'subscriptionStatus' defined previously. This variable is implemented for all the UPnP services provided by at least one service provider. When the control point detects that the service has not been subscribed by the user, said control point will show the user the option to subscribe it by means of a subscription web interface. The URL address of the subscription web interface is retrieved from the novel field included in the service description called 'subscriptionURL' defined previously.

The home gateway additionally comprises establishing a "network association process" using the NASS authentication subsystem defined by TISPAN in view of any user attempt to access the external network (for example the Internet) or service provider network. To carry out said "network association process" the home gateway additionally comprises at least the following elements:
● one authentication client implementing the authentication scheme used by the service provider and replying to the requests received from the UAAF module;
● one DHCP client requesting the configuration for the WAN interface of the home gateway, obtaining the IP address, the network mask and the access port; and,
● one proxy service routing all the user requests to the service implemented by the service provider.

The novel subscription service module of the present invention is the base service used by the rest of the UPnP services. Furthermore, the subscription service module identifies the user who is accessing the service provider network using the CLF component defined by TISPAN. The subscription service module receives the IP address assigned to the user. To identify the user, the subscription service module makes a request for service to the CLF component including the IP address and receives a reply including the unique user identifier "IMSI" (International Mobile Subscriber Identity).

The subscription service module comprises at least three communications interfaces for communicating with the user, with the service provider and with the CLF component of the NASS subsystem. Said interfaces are at least:
● the subscription web interface used by the control point when the user wants to subscribe to a UPnP service, showing the user the functionality offered by the UPnP service, the subscription fees, the terms of the contract and an option to "subscribe the service", storing the subscription of the user to the UPnP service when said user wishes to subscribe by means of an option shown in the interface;
● one internal interface for subscription status request located in the service provider and which is used by the rest of the UPnP services to see if a user is subscribed to a specific UPnP service. This interface also allows the service subscription module to receive a callback point used by the services so that they are informed of the changes in the subscription status of a given user; and,
● one user identity request interface which, defined with the CLF component, retrieves the unique user identity, IMSI, from the user IP address.

The novel method of the present invention broadens the functionality of the UPnP standard. A basic functionality of the UPnP standard is to periodically post the UPnP devices and the services implemented by the UPnP devices at the control points. This functionality is broaden by the method of the present invention distributing the UPnP service in at least two nodes located in the user equipment and in the service provider equipment, respectively. The node located in the user equipment is more specifically in a proxy service located in the home gateway or in a device outside said home gateway, said devices being connected to the home gateway and external device by means of a direct cable connection, wireless connection, telephony network, electrical network communication, etc., forming part of the user equipment.

Another basic functionality of the UPnP standard is that the control points are informed of the disconnection from the UPnP devices or from the services provided by the service provider when the disconnection from the home gateway, from the external device or the disconnection from the WAN network occurs.

The novel method of the present invention broadens the functionality of the UPnP standard, which by means of a home gateway connecting a user network with at least one service provider network, said UPnP standard comprising at least one control point and at least one user UPnP device placed in a selection of places selected from the home gateway and a device outside said gateway and connected to said home gateway, and said TISPAN NASS authentication comprising a set of modules formed by at least one ARF module, one AMF module, one UAAF module, one PDBF module, one NACF module and one CLF module, wherein said method comprises establishing the following steps over the UPnP standard:
● distributing a UPnP service in at least two different nodes: a user device located in the user equipment and a service provider node located in the service provider equipment;
● adding a field called 'subscriptionURL' in the part of the service description included in the device description document of the UPnP device, for each UPnP service implemented by said UPnP device; said field called 'subscriptionURL' being the URL address of a subscription web interface to which the control point is directed by the UPnP device when at least one user wants to subscribe to the UPnP service implemented by said UPnP device and coinciding with said URL address;
● adding a variable called 'subscriptionStatus' to the service description document of the UPnP device for each UPnP service implemented by said UPnP device; said variable called 'subscriptionStatus' being an indicator of the subscription status of the user to the UPnP service provided by the service provider, implemented by the UPnP device and shown to the user by means of the control point;
   ● adding a module called 'Subscription service' comprising at least one database storing a value of the variable 'subscriptionStatus' selected from 'SUBSCRIBED' and 'NOT_SUBSCRIBED' of the at least UPnP service associating at least one user therewith. In other words, the database stores all the subscription statuses to all the services of all the users.

To authenticate and identify the users wanting to subscribe to any service provided by any service provider, the method of the present invention additionally comprises:
● initiating the network association process by the home gateway;
● sending a request for authentication credential presentation from the service provider to the home gateway;
● checking the authentication credentials in the UAAF module, wherein said module denies the access to the service provider network when the authentication credentials do not overcome a pre-established authentication algorithm provided in said UAAF module, sending an approval message to the home gateway when the authentication credentials overcome the pre-established authentication algorithm provided in said UAAF module;

● assigning, from the NACF to the home gateway, an IP address when the authentication credentials overcome the pre-established authentication algorithm provided in the UAAF module;
● sending the IP address assigned to the home gateway to the CLF from the NACF;
● storing in the CLF the user identity, IMSI, associated with the user device which has been previously authenticated, associating said user identity IMSI with the IP address assigned to the home gateway;
● sending requests for user service subscription status retrieval, from the control point to the service provider by means of the proxy service of the user device;
● obtaining, in the subscription service module, the user subscription status to the UPnP, sending the user identification to the CLF module by means of his/her IP address and obtaining a reply from said CLF module made up of the user unique identifier, IMSI, and then verifying if there is a subscription to the service, returning the variable status 'subscripcionStatus';
● directing the user to the address determined by the 'subscriptionURL' of a service provided by the service provider, when the status variable called 'subscriptionStatus' is 'NOT_SUBSCRIBED' for the subscription status of the user to the service provided by the service provider;
● the user contracting the UPnP service provided by the service provider;
● updating the status variable called 'subscriptionStatus' to 'SUBSCRIBED' in the proxy service, wherein said proxy service further informs the control point of said update; and,
● providing the user with the UPnP service contracted by said user.

The method of the present invention allows the user to access the service subscribed from the service provider by means of the proxy service located in the home gateway or in the external UPnP device.

The novel method of the present invention additionally comprises, in the node located in the service provider, and for keeping the value of the variable 'subscriptionStatus' updated, establishing a request to the subscription service for obtaining the value of the status variable 'subscriptionStatus', wherein said subscription service provides the value of said status variable, which by means of an event service, updates the value of the status variable 'subscriptionStatus' every time the user starts an event selected from subscribing to a service and canceling a service.

It must be taken into account that, by means of the UPnP device placed in the user equipment, the control points (TV, personal computer, videogame console, PDA, mobile telephone, landline telephone, etc.) are responsible for reproducing the services provided by the service providers. In other words, of all the services offered by the service providers, the control point will only show those services which can be implemented by the intrinsic technical features thereof to the user.

### Brief Description of the Drawings

Figure 1 shows a block diagram of the system for subscribing services by means of extended UPnP standard and delegated NASS authentication of the present invention.
Figure 2 shows a block diagram where it is shown that a UPnP user device can comprise several embedded UPnP devices.
Figure 3 shows a block diagram where the device description document and service description document forming the user device are described.
Figure 4 shows the block diagram of the delegated NASS authentication system used by the present invention.
Figure 5 shows the TISPAN NGN architecture and its four layer design.
Figure 6 shows the block diagram with functional connections between part of the devices forming the user equipment and of the service provider equipment for an embodiment with two boxes.
Figure 7 shows the block diagram with functional connections between part of the devices forming the user equipment and of the service provider equipment for an embodiment with three boxes.
Figure 8 shows the flow chart with the basic steps for carrying out the method of the present invention to provide the system with the elements necessary for extending the UPnP standard.
Figure 9 shows the steps made up by the method of the present invention from when the user attempts to access a service until said service is shown to the user by means of his/her user device.
Figure 10 shows the steps of the method of the present invention of the system of the present invention to aid its understanding.

### Description of an Embodiment of the Invention

A description of several embodiments of the invention is given below making reference to the numbering used in the drawings in a non-limiting and illustrative manner. The different embodiments of the system depend on where the user device is placed, there is an embodiment model with two boxes and another embodiment model with three boxes.

The model with two boxes comprises the control point and the Media Player or renderer device in one box. The other box comprises a home gateway with the modifications described in the present invention for converting said home gateway into a Media Server.

The model with three boxes comprises a box in the control point. In another box the Media Server capable of connecting to the home gateway and the third box comprises the media render or renderer device capable of displaying the Media Server content.

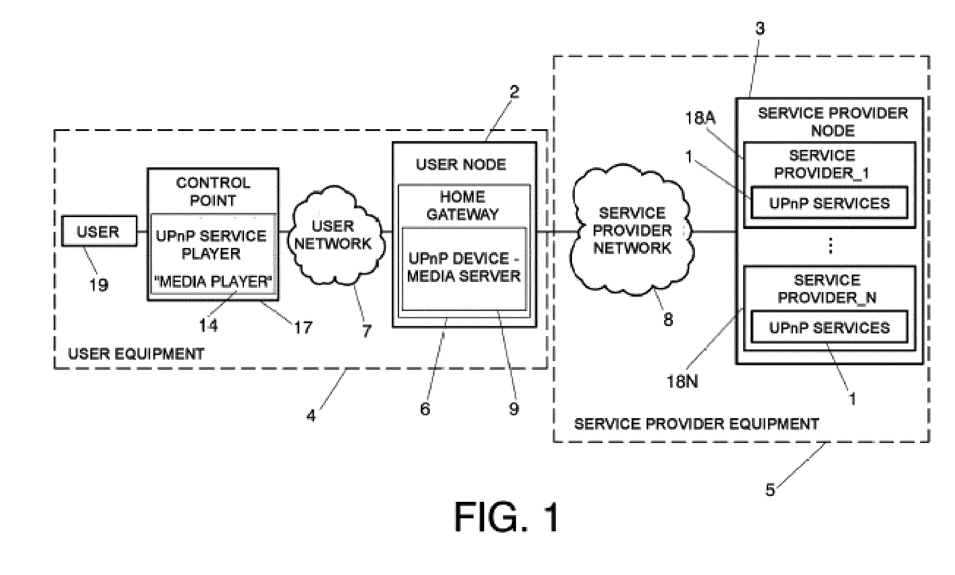

Figure 1 shows a block diagram of the system for subscribing services by means of extended UPnP standard and delegated NASS authentication of the present invention according to the model with two boxes. A user (19) has at least one control point (17) which can be any device capable of reproducing services provided by a service provider, said device being selected from a television, a personal digital assistant or PDA, a mobile telephone, a landline telephone, a personal computer, a videogame console, etc. Said control point (17) is connected to the user network (7) which is in turn connected to the home gateway (6) which acts as a user node (2) from the system architecture viewpoint. Said home gateway (6) is connected with the service provider (18A-18N) by means of the service provider network (8). It is thus possible to connect the control point (17) comprising a UPnP service player (14) (Media Player) with the service provider (18A) and offer among all the UPnP services (1) provided by the service provider, the services accessible by said control point (17) which coincide with the services that can be played by the UPnP service player (14) to the user (19). The elements user (19), control point (17) together with the UPnP service player (14), user network (7), user node (2) and home gateway (6) are part of the user equipment (4). The elements service provider node (3), service provider network (8) and service provider (18) are part of the service provider equipment (5). The service provider node (3) represents, from the architecture viewpoint, the set of the service providers, since one and the same user can access several services provided by several service providers (18A-18N). In the embodiment with two boxes, the home gateway (6) additionally comprises the UPnP device (9) performing the function of locally providing Media Server, the UPnP services provided by the service provider.

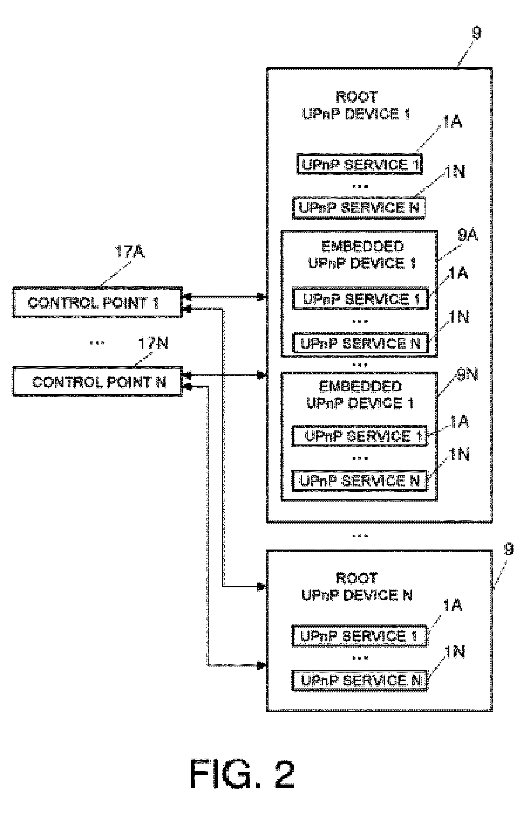

Figure 2 shows a block diagram wherein it is shown that a UPnP device (9) can comprise several UPnP devices (9A, ...,9N) embedded in the UPnP device (9), wherein each embedded UPnP device (9A,...,9N) can comprise at least one UPnP service (1A,...,1N). When a UPnP device (9) comprises at least one embedded UPnP device, said UPnP device (9) is also called a "root" UPnP device (9). Additionally, it is shown that the devices (9) can be connected to one or several control points (17A,...,17N). Each embedded UPnP device (9A,...,9N) locally performs the functions of a Media Server, since it is really a routing server, "proxy service", of the Media Server of the service provider. The block diagram of the drawing is also valid both for an embodiment with two boxes and for an embodiment with three boxes.

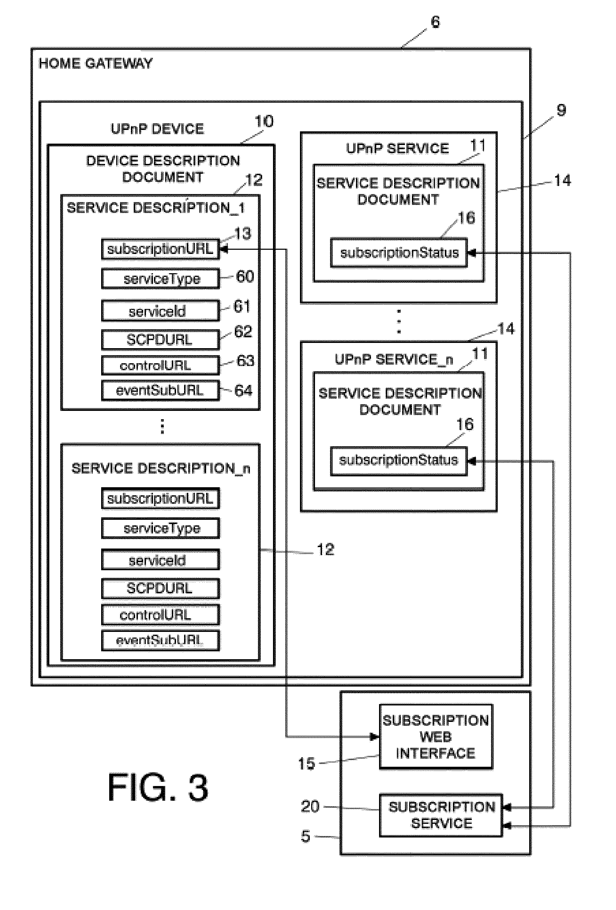

Figure 3 shows a block diagram wherein the device description document (10) and service description documents (11) forming the user UPnP device placed in the home gateway (6) in an embodiment with two boxes are described. Each UPnP device (9) comprises at least one device description document (10) comprising a part called service description (12). The service description (12) comprises the fields defined by the UPnP standard: 'serviceType' (60), 'serviceld' (61), 'SCPDURL' (62), 'controlURL' (63), 'eventSubURI' (64) and the novel field added by the present invention called 'subscriptionURL' (13). The UPnP device (9) additionally comprises a service description document (11) for each UPnP service which can be implemented by said UPnP device (9), the UPnP service implemented by the UPnP device being a service selected from the set of services formed by all the services (1) provided by the service provider (18). The present invention adds, for each UPnP service implemented by the UPnP device, a new status variable called 'subscriptionStatus' (16) representing the subscription status of the user (19) to the UPnP service provided by the service provider. The possible values of the status variable called 'subscriptionStatus' are 'SUBSCRIBED' if the user has subscribed to the UPnP service and 'NOT_SUBSCRIBED' when the user has not subscribed to the UPnP service. The novel field 'subscriptionURL' represents the URL address of the subscription web interface which is shown to the user so that he/she subscribes to a UPnP service when the status variable 'subscriptionStatus' associated with said UPnP service has a 'NOT_SUBSCRIBED' value. To know the value of the variable status 'subscriptionStatus' associated with UPnP service, the service provider equipment (5) comprises the subscription service module (20) comprising a database with all the information of all the subscriptions to UPnP services of all users, said information comprising the value of the status variable 'subscriptionStatus'. The embodiment with three boxes is not shown in Figure 3, but it is completely similar to the configuration with two boxes except that the user UPnP device would be located in the box outside the home gateway, said box containing the user UPnP device being connected with the home gateway, said home gateway providing the necessary routing services so that the user UPnP device can connect with the service provider.

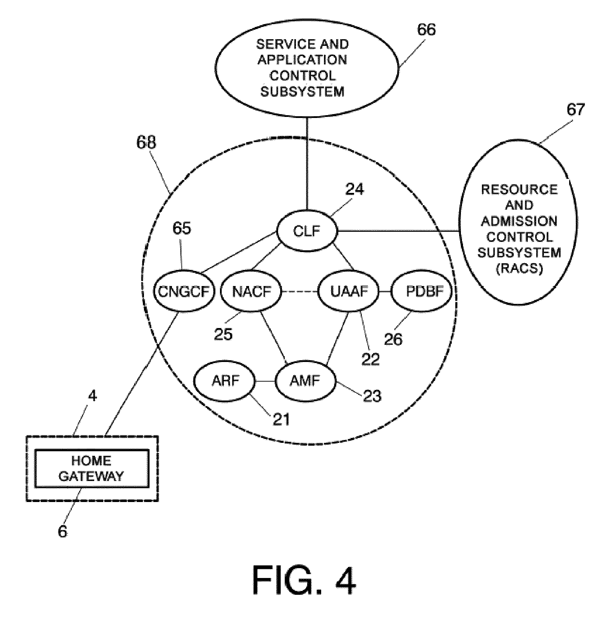

Figure 4 shows the block diagram of the TISPAN delegated NASS authentication system used by the present invention. Said NASS authentication subsystem comprises the following modules: the ARF (Access Relay Function) module (21), the UAAF (User Access Authorization Function) module (22), the AMF (Access Management Function) module (23), the CLF (Connectivity Session Location and Repository Function) module (24), the NACF (Network Attachment Control Function) module (25), the PDBF (Profile Database Function) module (26), the CNGCF (Customer Network Gateway Configuration Network) module (65), the service and application control subsystem (66) and the admission and resource control subsystem (67). The previously described modules logically connect the home gateway (6) with the service and application control subsystem (66) and with the admission and resource control subsystem (67). By means of the previously described modules, the system of the present invention is capable of determining the subscription status of a specific user to a specific service by means of associating the user IP address with the user identity number IMSI performed by the TISPAN delegated NASS authentication system. The block diagram shown in Figure 4 is independent from the embodiment described.

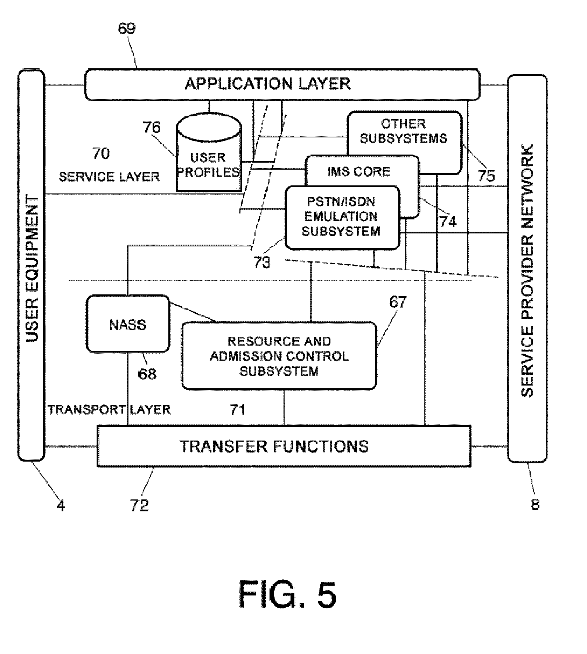

Figure 5 shows the TISPAN NGN architecture which is designed in four layers: the application layer (69), the service layer (70), the transport control sublayer (71) and the transfer function layer (72). Said service layer comprises the user profiles (76). Said transport control sublayer (71) comprises the subsystems responsible for authorizing and authenticating the so-called NASS ("Network Attachment Subsystem") (68) and the Quality of Service, "QoS", called RACS ("Resource and Admission Control Subsystem") (67). Additionally, said TISPAN NGN architecture comprises a PSTN/ISDN emulation subsystem (73), the IMS core (74) and other subsystems (75). The block diagram shown in Figure 5 is independent from the embodiment described.

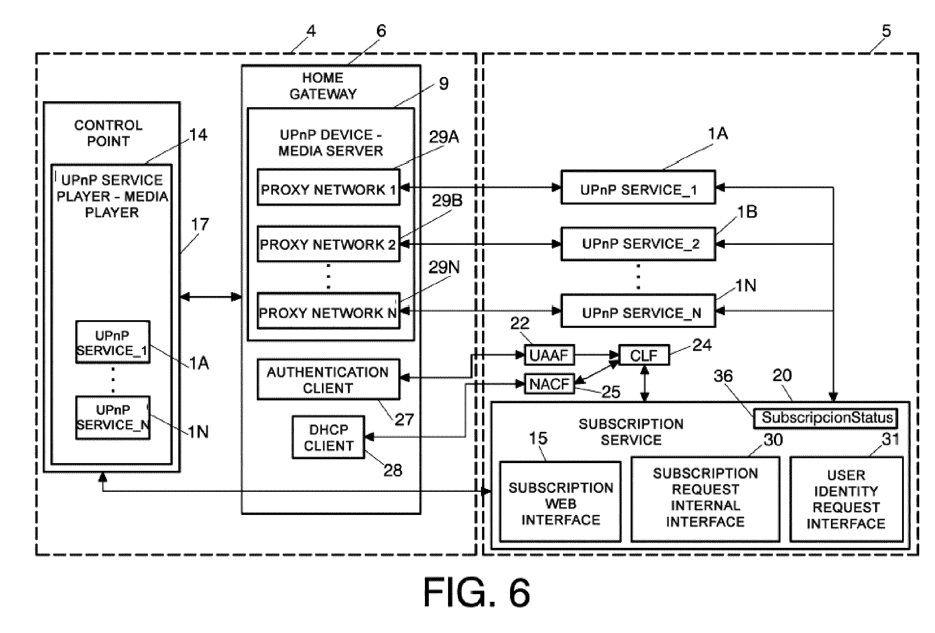

Figure 6 shows the block diagram with functional connections between parts of the devices forming the user equipment (4) and the service provider equipment (5). The home gateway (6) additionally comprises an authentication client (27), a DHCP client (28) and a UPnP device (9), performing the functions of a Media Server, which in turn comprises at least one proxy service (29A,...,29N) for each service (1A,...,1 N) provided by the service provider comprised in the service provider equipment (5). The subscription service (20) additionally comprises a subscription web interface (15), a subscription request internal interface (30) and a user identity request interface (31). The control point (17) additionally comprises the UPnP service player (14) implementing the UPnP services (1A-1N) in accordance with the technical characteristics of said control point, i.e., performs the functions of a Media Player. The embodiment shown in Figure 6 corresponds with the embodiment with two boxes.

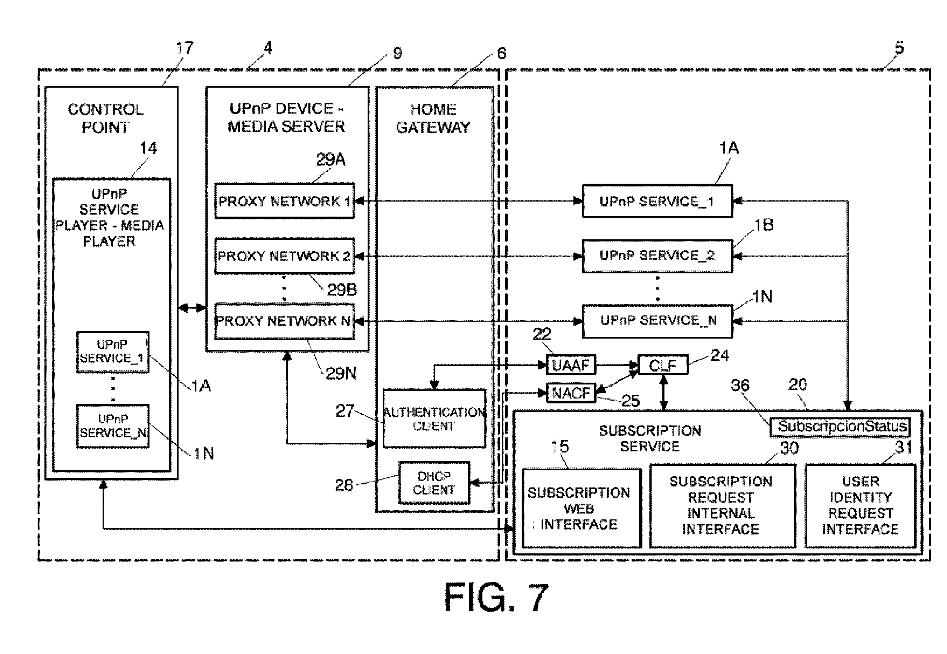

Figure 7 shows the block diagram with functional connections between part of the devices forming the user equipment (4) and the service provider equipment (5) corresponding with the embodiment with three boxes. The home gateway (6) additionally comprises an authentication client (27) and a DHCP client (28). The UPnP device (9) comprises at least one proxy service (29A,...,29N) for each service (1A,...,1N) provided by the service provider. The connection between the UPnP device (9) and the service provider comprised in the service provider equipment (5) is made by means of the home gateway (6) comprising at least one routing server (not depicted) for establishing said connection. The subscription service (20) additionally comprises a subscription web interface (15), a subscription request internal interface (30) and a user identity request interface (31). The control point (17) additionally comprises the UPnP service player (14) implementing the UPnP services (1A-1 N) in accordance with the technical characteristics of said control point, i.e., performs the functions of a Media Player.

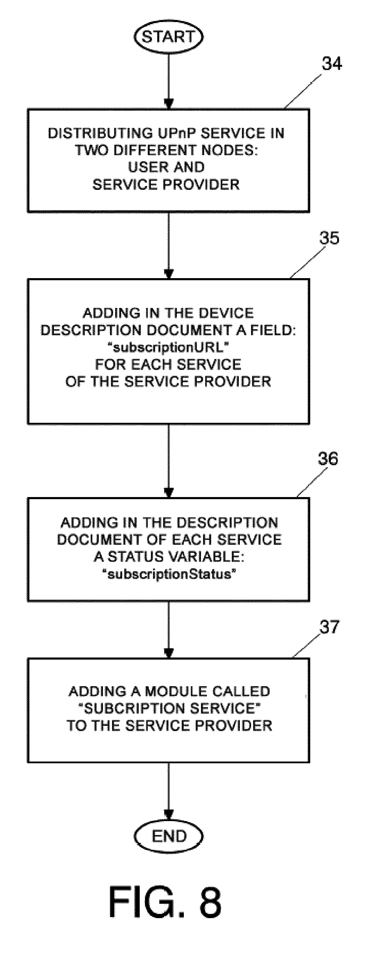

Figure 8 shows the flow diagram with the basic steps carried out by the method of the present invention for providing the system with elements necessary for extending the UPnP standard. The steps are:
● distributing (34) a UPnP service in at least two different nodes: a user node located in the user equipment and a service provider node located in the service provider equipment;
● adding (35) a field called 'subscriptionURL' in the part of the service description included in the device description document of the UPnP device placed in a place selected from the home gateway and an external device connected to the home gateway directly or through the user network, for each UPnP service provided by the service provider; said field called 'subscriptionURL' being the URL address of a subscription web interface to which the control point is directed when at least one user wants to subscribe to the UPnP service provided by the service provider and coinciding with said URL address;
● adding (36), for each UPnP service provided by the service provider, a status variable called 'subscriptionStatus' in the service description document; said variable called 'subscriptionStatus'(16) being an indicator of the subscription status of the user, associated with the UPnP device, the UPnP service provided by the service provider; and,
● adding (37) a module called 'Subscription service' keeping the information of all the service subscriptions of all users.

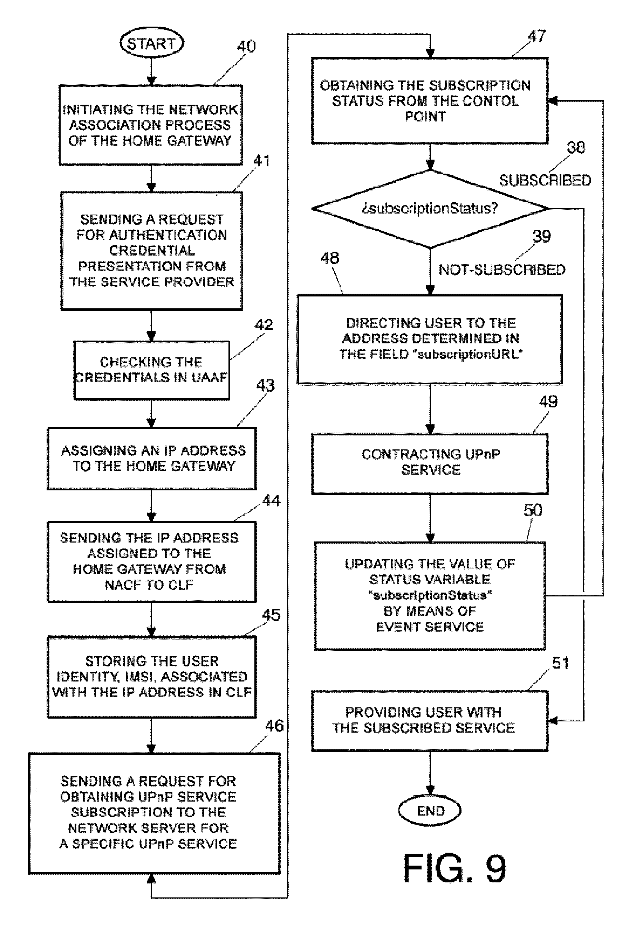

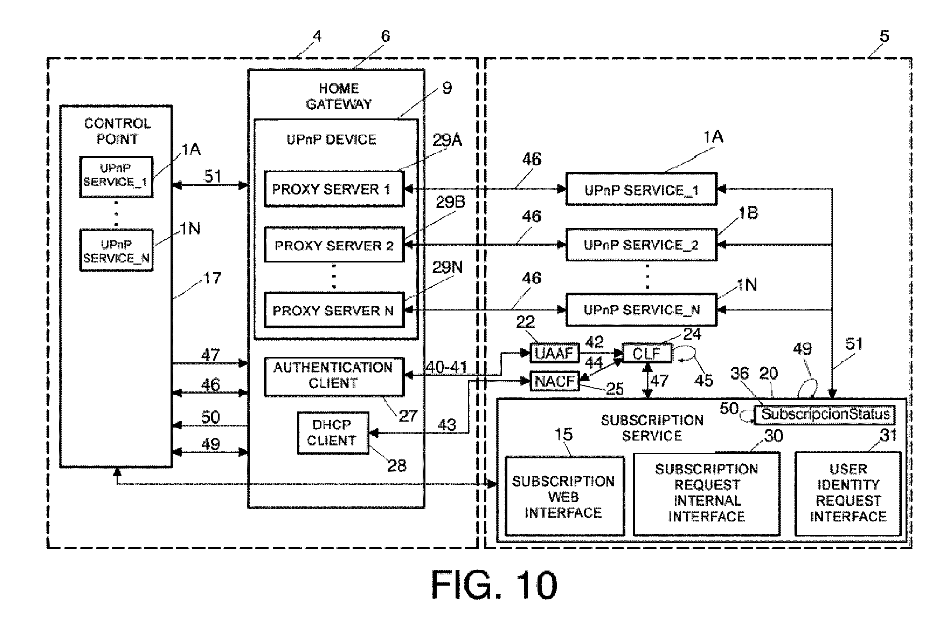

Figure 9 shows the steps of made up by the method of the present invention from when the user attempts to access a service until said service is shown to the user by means of the control point. Additionally, Figure 10 shows part of said steps of the method of the system of the present invention to aid its understanding. Said steps of the method are:
● initiating (40) the network association process by the home gateway;
● sending (41) a request for authentication credential presentation from the service provider to the home gateway;
● checking (42) the authentication credentials in the UAAF module, wherein said module denies the access to the service provider network when the authentication credentials do not overcome a pre-established authentication algorithm provided in said UAAF module, sending an approval message to the home gateway when the authentication credentials overcome the pre-established authentication algorithm provided in said UAAF module;
● assigning(43) the home gateway an IP address from the NACF when the authentication credentials overcome the pre-established authentication algorithm provided in the UAAF module;
● sending (44) the IP address assigned to the home gateway from the NACF to the CLF;
● storing (45) the user identity, IMSI, associated with the UPnP device which has been previously authenticated in the CLF, associating said user identity IMSI with the IP address assigned to the home gateway;
● sending (46) requests for user service subscription status retrieval, from the control point to the service provider by means of the proxy service of the UPnP device;
● obtaining (47), in the subscription service module, the user subscription status to the UPnP, sending the user identification to the CLF module by means of his/her IP address and obtaining a reply from said CLF module made up of the user unique identifier, IMSI, and, then verifying if there is a subscription to the service, returning the status of the variable 'subscripcionStatus';
● directing (48) the user to the address determined by the 'subscriptionURL' of a service provided by the service provider when the status variable called 'subscriptionStatus' is 'NOT_SUBSCRIBED' for the subscription status of the user to the service provided by the service provider;
● the user contracting (49) the UPnP service provided by the service provider;
● updating (50) the status variable called 'subscriptionStatus' to 'SUBSCRIBED' in the proxy service, wherein said proxy service further informs the control point of said update; and,
● providing (51) the user with the UPnP service contracted by said user.

## Claims

1. A system for subscribing services by means of extended UPNP standard and TISPAN delegated NASS authentication **characterized in that** it comprises at least:
● one UPnP "Universal Plug and Play" service (1) distributed in at least two different nodes: a user node (2) located in the user equipment (4) and a service provider node (3) located in the service provider equipment (5);
● a user equipment (4) comprising at least:
o one home gateway (6) connecting a user network (7) with at least one service provider network (8);
o a UPnP device (9) placed in a selection of places selected from the home gateway (9) and a device outside said gateway and connected to said gateway, wherein said UPnP device comprises at least one device description document (10) and at least one service description document (11), wherein the device description document (10) comprises at least, in the part of service description for each service (12), a field called 'subscriptionURL' (13), representing the URL address of a subscription web interface (15), and wherein the service description document (11) comprises at least one status variable called 'subscriptionStatus' (16) for each UPnP service (1) implemented by said UPnP device (9), indicating the subscription status of the user to said UPnP service (1) provided by the service provider (18);
o one control point (17) searching the UPnP service placed in the UPnP device and checks the subscription status of the user to said implemented UPnP service (1), wherein said control point allows accessing said UPnP service if the user subscribes to said UPnP service, and otherwise, redirecting the user to a contracting URL;
● a service provider equipment (5) comprising at least:
o one subscription service module (20) comprising at least information of the subscription status of the user to the UPnP service (1);
o one ARF "Access Relay Function" module (21), inserting the local configuration into the user requests;
o one UAAF "User Access Authorization Function" module (22), carrying out user authentication and authorizing said user for his/her access to the service provider network;
o one AMF "Access Management Function" module (23), translating the network access requests emitted by the user and resends them to the UAAF module;
o one CLF "Connectivity Session Location and Repository Function" module (24), maintaining the correspondence between the user IP address (4) and his/her identity;
o one NACF "Network Attachment Control Function" module (25), sending the configuration data of the WAN "Wide Area Network" interface to the home gateway, wherein said configuration data comprises at least one IP address, one network mask and one gateway; and,
o a PDBF "Profile Database Function" module (26), containing the user authentication data (4) at network level.

2. The system for subscribing services by means of extended UPNP standard and TISPAN delegated NASS authentication according to claim 1, **characterized in that** the home gateway (6) additionally comprises at least:
● one authentication client (27) implementing the authentication scheme used by the service provider and responds to the requests received from the UAAF module;
● one DHCP client (28) requesting the configuration for the WAN interface of the home gateway, obtaining the IP address, the network mask and the access port; and,
● one proxy service (29), routing all the user requests to the service implemented by the service provider.

3. The system for subscribing services by means of extended UPNP standard and TISPAN delegated NASS authentication according to claim 1 or 2, **characterized in that** the subscription service module additionally comprises at least:
● the subscription web interface (15) used by the control point (17) when the user (19) wants to subscribe to UPnP service (1), showing the user the functionality offered by the UPnP service, the subscription fees, the terms of the contract and an option of "subscribing the Service", storing the subscription of the user (19) to the UPnP service (1) when said user (4) wishes to subscribe by means of an option shown in the interface;
● one internal interface for subscription request (30) located in the service provider (18) and which is used by the rest of the UPnP services to see if a user is subscribed to a specific UPnP service; and,
● one user identity request interface (31) which, defined with the CLF component (24), retrieves the user unique identity, IMSI, from the user IP address.

4. A method for subscribing services by means of extended UPNP standard and TISPAN delegated NASS authentication, which connects a user network (7) with at least one service provider network (8) by means of a home gateway (6), said UPnP standard comprising at least one control point (17) and at least one user UPnP device placed in a selection of places selected from the home gateway (9) and a device outside said gateway and connected to said home gateway (9), and said TISPAN NASS authentication comprising a set of modules formed by at least one ARF module (21), one AMF module (23), one UAAF module (22), one PDBF module (26), one NACF module (25) and one CLF module(24); **characterized in that** said method comprises performing the following steps over the UPnP standard:
● distributing (34) a UPnP service (1) in at least two different nodes: a user device (2) located in the user equipment (4) and a service provider node (3) located in the service provider equipment (5);
● adding (35) a field called 'subscriptionURL' (13) in the part of the service description (12) included in the device description document (10) of the UPnP device (9), for each UPnP service (1) implemented by said UPnP device (9); said field called 'subscriptionURL' being the URL address of a subscription web interface (15) to which the control point (17) is directed by the UPnP device (9) when at least one user (19) wants to subscribe to the UPnP service (1) implemented by said UPnP device (9) and coinciding with said URL address;
● adding (36) a variable called 'subscriptionStatus' to the service description document (11) of the UPnP device (9) for each UPnP service (1) implemented by said UPnP device (9); said variable called 'subscription Status' being an indicator of the subscription status of the user (19) to the UPnP service (1) provided by the service provider (18), implemented by the UPnP device (9) and shown to the user by means of the control point (17);
● adding (37) a module called 'subscription service' (20) comprising at least one database storing a value of the variable 'subscriptionStatus' (16) selected from SUBSCRIBED' (38) and 'NOT_SUBSCRIBED' (39) of the at least UPnP service (1) associating at least one user (19)therewith.

5. The method for subscribing services by means of extended UPnP standard and TISPAN delegated NASS authentication according to claim 4, **characterized in that** it additionally comprises:
● initiating (40) the network association process by the home gateway;
● sending (41) a request for authentication credential presentation from the service provider to the home gateway (6);
● checking (42) the authentication credentials in the UAAF module (22), wherein said module denies the access to the service provider network (8) when the authentication credentials do not overcome a pre-established authentication algorithm (51) provided in said UAAF module (22), sending an approval message to the home gateway (6) when the authentication credentials overcome the pre-established authentication algorithm (51) provided in said UAAF module (22);
● assigning(43) the home gateway (6) an IP address from the NACF (25) when the authentication credentials overcome the pre-established authentication algorithm provided in the UAAF module (22);
● sending (44) the IP address assigned to the home gateway to the CLF from the NACF;
● storing (45) the user identity, IMSI, associated with the user device which has been previously authenticated in the CLF, associating said user identity IMSI with the IP address assigned to the home gateway;
● sending (46) requests for user service subscription status retrieval, from the control point to the service provider by means of the proxy service of the user device;
● obtaining (47), in the subscription service module, the user subscription status to the UPnP service (1), sending the user identification to the CLF module by means of his/her IP address and obtaining a reply from said CLF module made up of the user unique identifier, IMSI, and, then verifying if there is a subscription to the service, returning the status of the variable 'subscripcionStatus';
● directing (48) the user to the address determined by the 'subscriptionURL' of a service provided by the service provider when the status variable called 'subscriptionStatus' is 'NOT_SUBSCRIBED' for the subscription status of the user to the service provided by the service provider;
● the user (19) contracting (49) the UPnP service provided by the service provider;
● updating (50) the status variable called 'subscriptionStatus' to 'SUBSCRIBED' in the proxy service, wherein said proxy service further informs the control point of said update; and,
● providing (51) the user with the UPnP service contracted by said user.

6. The method for subscribing services by means of extended UPNP standard and TISPAN delegated NASS authentication according to claim 5, **characterized in that** step "i)" additionally comprises, in the node located in the service provider, establishing a request to the subscription service for obtaining the value of the status variable 'subscriptionStatus', wherein said subscription service provides the value of said status variable maintaining said value of the variable status 'subscriptionStatus' updated by means of an event service which is updated every time the user starts an event selected from subscribing to a service and canceling a service.
